# EUROPEAN PATENT APPLICATION

(11) **EP 4 319 081 A1**
(43) Date of publication of application: **07.02.2024**
(21) Application number: 22188572.6
(22) Date of filing: 03.08.2022
(51) Int. Cl.: H04L 41/14, G06N 20/00, H04L 41/16, H04L 43/06

(54) **BASE STATION, USER EQUIPMENT, NETWORK AND METHOD FOR MACHINE LEARNING RELATED COMMUNICATION**

(71) Applicant: Continental Automotive Technologies GmbH, 30165 Hannover (DE)
(72) Inventor: Shah, Rikin, 81739 München (DE); Kim, Hojin, 81739 München (DE)
(74) Representative: Continental Corporation

(57) **Abstract**

The invention relates to a base station, a terminal and a
method, a network and a network device, especially cellular mobile telecommunication network element (gNB) and/or user equipment (UE1, UE2, UE3, UE4, ...),
- configured to enable or disable by a network device (gNB) considering a global model performance status of machine learning (AI/ML)
local model update reports from user equipments (UE1, UE2, UE3, UE4, ...).

## Description

The invention relates to a base station, a user equipment, a network and a method for machine learning (AI/ML) related communication between a mobile telecommunication network and user equipment.

Machine learning related details are discussed e.g. in US 2022/0101204 A1, WO 2022/050432 A1, US 2022/0038349 A1, US 2022/0095146 A1, US 2022/0116764 A1, US 2022182802 A1, WO 2021247448 A1, WO 2021108796 A2, WO 2022089751 A1.

In AI/ML global model training with federated learning, gNB-UE signaling to support model update information exchange can be highly inefficient when a global model convergence status is not considered.

For example, high amount of user equipments (pre-selected for local model support) always send their own local model updates to base stations / gNB based on either periodic or event-triggering ways by causing signaling overhead increase particularly when global model gets close to target maturity.

Recently, AI/ML has been adopted as a study item for 3GPP Release18, and 3GPP also started to work on its technical investigation to apply to multiple use cases for PHY/MAC and higher layers.

Among AI/ML techniques, federated learning (FL) has been included in 3GPP AI/ML working list.

In FL, AI/ML based local model updates are collected from multiple users (e.g., UE) and the global model on the server (e.g., gNB) is updated in iterative way for model training/inference.

For FL based gNB-UE communications, some user equipments providing local model updates commonly contribute to global model performance degradation such as model divergence due to high variety of local datasets (aka. data diversity). Due to device heterogeneity and statistical heterogeneous dataset, many communication rounds of model training becomes burdensome due to signaling overhead.

Therefore, signaling overhead is one of the key challenges that need to be reduced. Without considering global model performance status such as model convergence, gNB-UE signaling for model training can be very inefficient as there are certain amount of user equipments (UE) causing data diversity.

An object of the invention is to allow improved machine learning (AI/ML) related communication between a mobile telecommunication network (device) and user equipment(s). This object is respectively achieved by the teaching of the independent patent claims. Embodiments of the invention allow an improved machine learning (AI/ML) related communication between a mobile telecommunication network (device) and user equipment(s), e.g. more efficient communication.

Embodiments of the invention can allow signaling overhead to be be highly reduced, especially for a model training or update phase.

An embodiment of the invention is that a set of local model update reports from different number of user equipments UEs (e.g. all or subset) can be enabled/disabled by a network device as e.g. a base station or gNB by considering global model performance status such as convergence.

A benefit of an embodiment of the invention can be that based on the proposed idea, signaling overhead can be highly reduced for model training phase.

In the following some embodiments of the invention are described, which also in any combination present further preferred embodiments of the invention.

Embodiments of the invention are described below with reference to the enclosed figures showing the following:
Fig. 1 communication of user equipments via e.g. a cellular communication network with a network element as e.g. a base station and vice versa,
Fig. 2 a cellular mobile telecommunication network element configured to send a message with a command to user equipments ordering them to either enable or disable local model update reports update reports,
Fig. 3 a flowchart of user equipment and base station behaviour.

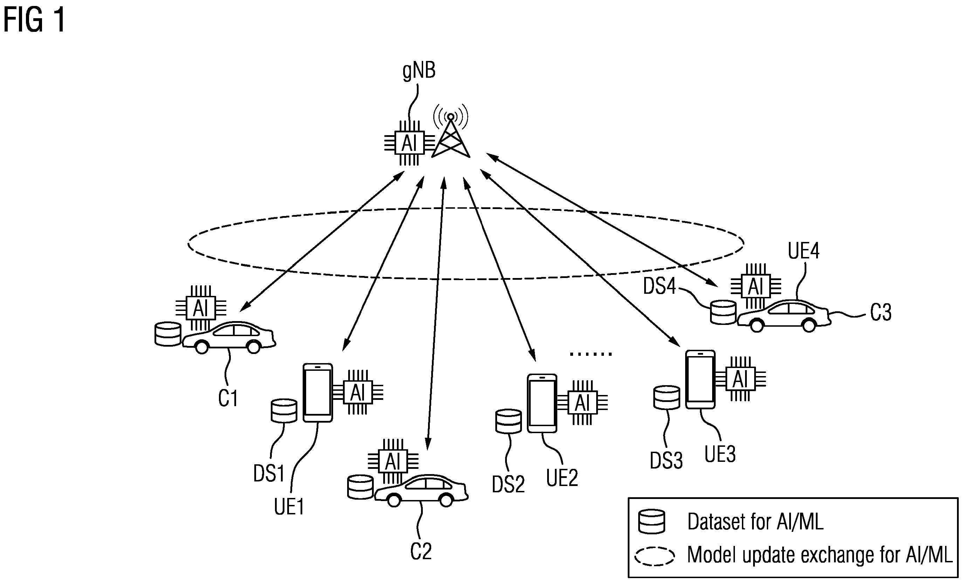

FIG. 1 generally shows a so called artificial intelligence and/or machine learning (AI/ML) model approach with input data and training/test data for generating output data. Instead of a fixed algorithmic scheme a training/test data / local (UE) data based data input processing can be used.

FIG. 1 generally shows user equipments UE1, UE2, UE3, UE4 here each respectively e.g. in or outside a car C1, C2, C3 or part (TCU) of a car, each user equipments UE1, UE2, UE3, UE4 communicating via e.g. a cellular communication network with a network element as e.g. a base station gNB.

User equipments UE1, UE2, UE3, UE4 e.g. store model update exchange data for AI / ML in datasets DS1, DS2, DS3, DS4 in a memory.

User equipments UE1, UE2, UE3, UE4 e.g. transmit with such cellular communication network air interface (doted circle) model update exchange data for AI/ ML.

Recently, AI/ML has been adopted as study item for 3GPP Release18 and 3GPP also started to work on its technical investigation to apply to multiple use cases for PHY/MAC and higher layers.

Among AI/ML techniques, federated learning (FL) has been included in 3GPP AI/ML working list.

In FL, AI/ML based local model updates are collected from multiple users (e.g., UE) and the global model on the server (e.g., gNB) is updated in iterative way for model training/inference.

Local UE data, especially model update exchange related data, from user equipments UE is sent to a network element, as e.g. a base station gnB of a cellular communication network.

For FL based gNB-UE communications,
Some user equipments UE1-UE4 providing local model updates commonly contribute to global model performance degradation such as model divergence due to high variety of local datasets (aka. data diversity).

Due to device heterogeneity and statistical heterogeneous dataset, many communication rounds of model training becomes burdensome due to signaling overhead.

Therefore, signaling overhead is one of key challenges that need to be reduced. Without considering global model performance status such as model convergence, base station / gNB-UE signaling for model training can be very inefficient as there are certain amount of UEs causing data diversity.

In AI/ML global model training with federated learning, a base station gNB-UE signaling to support model update information exchange can be highly inefficient when global model convergence status is not considered.

For example, high amount of user equipments UE1-UE4 (pre-selected for local model support) might always send their own local model updates to a base station gNB based on either periodic or event-triggering ways by causing signaling overhead increase particularly when global model gets close to target maturity.

A proposed scheme according to some embodiments of the invention can be that a set of local model update reports from different number of User equipments UE1, UE2, UE3, UE4 (e.g. all or subset) can be enabled/disabled by gNB by considering global model performance status such as convergence.

A benefit can be that a signaling overhead can be highly reduced for a (AI / ML) model training phase.

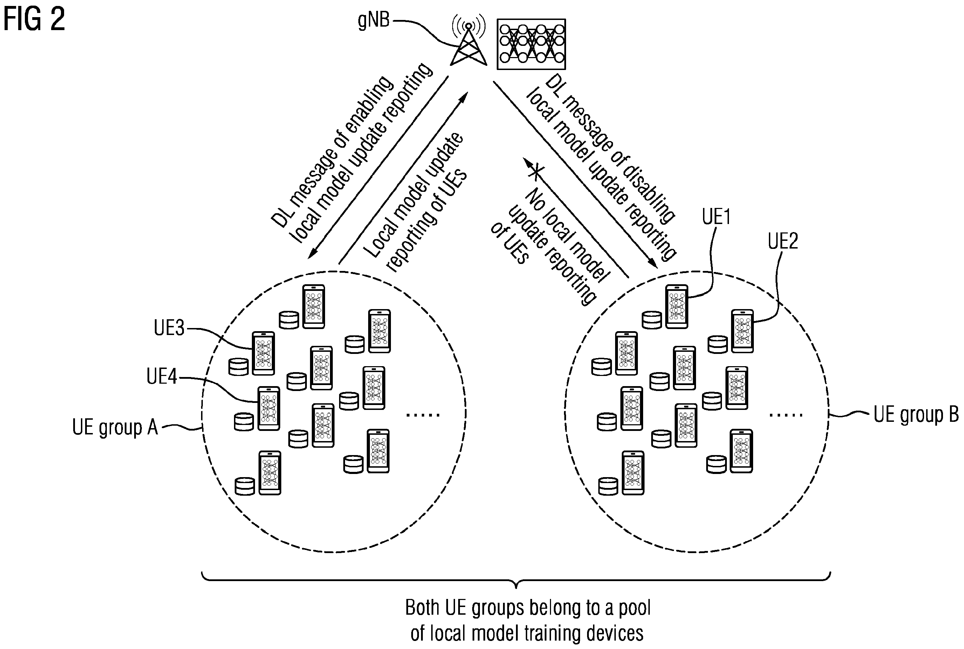

As Fig. 2 shows for some embodiments of the invention,
in order to e.g. limit traffic in the cellular communication network,
a network device as e.g. a cellular mobile telecommunication network element (gNB), especially a base station (gNB), can be configured to send a message with a command to one or more user equipments or groups of user equipments (UE group A and UE group B) ordering them to enable or disable local model update reports update reports,
e.g. the sending being based on whether a global model maturity condition is met for a configured threshold criteria,
e.g. wherein if the configured threshold criteria is not met, the network device (gnB) enables local model update reports from some or all user equipments or groups of user equipments (UE group A and UE group B).

E.g. a user equipment (e.g. in UE group A and UE group B) does what it is commanded to do,
and/or it is configured to receive from a network device (gnB) a message with a command to enable or disable local model update reports update reports,
and configured to execute a received command.

With a given pool (as the one in Fig 2 left side or as the one in Fig 2 right side) of available User equipments (UE group A and UE group B) that can provide local model updates to gNB, local model update reports from any amount of User equipments (UE group A and UE group B) can be enabled or disabled. Specifically, if global model maturity condition is met for the configured threshold, a network element as e.g. a base station gNB disables local model update reports from certain amount of User equipments (UE group A and UE group B)selectively.

If global model maturity condition is not met and requires intensive model training for convergence, a base station gNB enables local model update reports from all available User equipments (UE group A and UE group B).

The configurable criteria to determine enable/disable for local model update reporting is set by network.

For signaling of enabling/disabling local model update reports of all User equipments (UE group A and UE group B) , it can be broadcasted through system information message, e.g. such as one bit use.

E.g. if gNB broadcasts "1" in the system information message, then local model update report is disabled.

If a base station gNB broadcasts "0" in the system information message, then local model update report is enabled. (or the other way round)

Further, a base station gNB can enable/disable local model update reporting of selective User equipments (UE group A and UE group B)and it can be done through MAC CE.

If MAC CE indicates "1", then local model update report is disabled.

If MAC CE indicates "0", then local model update report is enabled.

As Fig 2 shows, UE group A receives a message of enabling local model update report and UE group B receives a message of disabling local model update report.

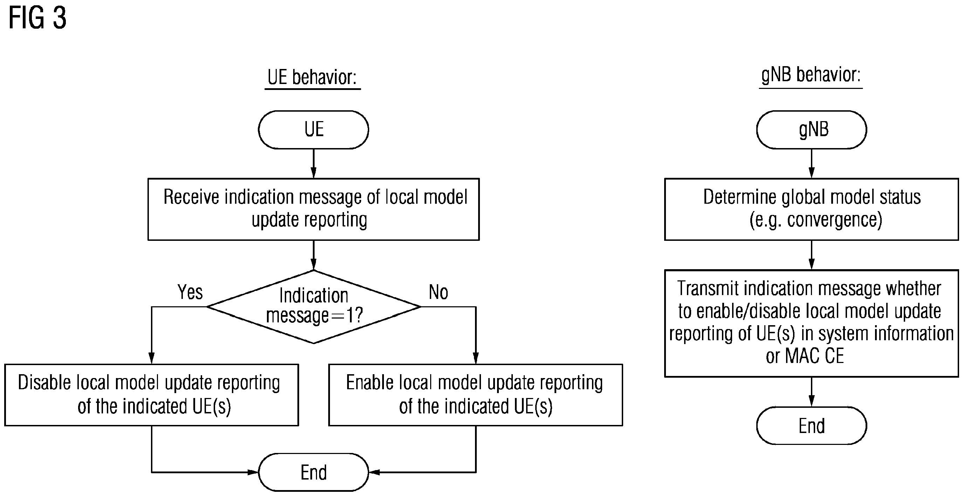

As Fig. 3 shows for some embodiments of the invention,
that a user equipment UE can receive an (indication) message of local model update reporting (from a network device as e.g. a base station a base station gNB. The message can e.g. be "1" and/or to disable or not do local model update reports update reports, or the message can e.g. be not "1" and/or to enable or do local model update reports update reports.

Accordingly, a or each receiving user equipment does what it is told and/or either disables local model update reporting or enables local model update reporting.

A network element as e.g. a base station determines a global model status (as e.g. a convergence).

A network element as e.g. a base station gNB, in order to e.g. limit traffic in the cellular communication network, is configured to transmit an indication message whether to enable or disable local modeiul update reporting of user equipments UE in e.g. a broadcast or system information or in a dedicated message or a MAC CE message.

A network element as e.g. a base station gNB configures criteria to determine enable/disable mode for local model update reporting across User equipments UE1, UE2, UE3, UE4.

A network element as e.g. a base station gNB uses either system information message of MAC CE message to send indication message of enabling/disabling local model update reporting.

User equipments UE providing local model update reports decode a network element's or base station's gNB indication message whether to send or not to send local model update report.

The mentioned indication message or message with a command can be sent by a A network element as e.g. a base station gNB based on periodic or non-periodic way depending on network.

## Claims

**1.** Network device, especially cellular mobile telecommunication network element (gNB) and/or user equipment (UE1, UE2, UE3, UE4),
- configured to enable or disable by a network device (gNB) considering a global model performance status of machine learning (AI/ML)
local model update reports from user equipments.

**2.** Network device according to claim 1,
- configured to enable or disable a set of local model update reports from all user equipments , especially all user equipments receiving a message with a command from the network device (gNB) to enable or disable local model update reports update reports.

**3.** Network device according to claim 1,
- configured to enable or disable all or a set of local model update reports from subset of the user equipments,
especially of all user equipments receiving a message with a command from the network device (gNB) local model to enable or disable local model update reports.

**4.** Network device according to any of the preceding claims,
configured to enable or disable by a network device (gnB), considering a global model performance status of machine learning (AI/ML), which is a convergence status, a set of local model update reports from all or a subset of the user equipments.

**5.** Network device according to any of the preceding claims,
wherein the network device (gNB) is a cellular mobile telecommunication network element (gNB), especially a base station (gNB),
configured to send a message with a command to user equipments ordering them to enable or disable local model update reports update reports.

**6.** Network device according to any of the preceding claims,
wherein the network device is a user equipment ()
configured to receive from a network device (gNB) a message with a command to enable or disable local model update reports update reports,
and configured to execute a received command.

**7.** Network device according to any of the preceding claims,
wherein the network device is a cellular mobile telecommunication network element (gNB), especially a base station (gNB),
configured to send a message with a command to user equipments ordering them to enable or disable local model update reports update reports,
the sending being based on whether a global model maturity condition is met for a configured threshold criteria,
wherein if the configured threshold criteria is not met, the network device (gNB) enables local model update reports from some or all user equipments

**7.** Network device according to any of the preceding claims,
wherein a configured threshold criteria to determine to enable or disable a local model update reporting is set by a telecommunication network.

**8.** Network device according to any of the preceding claims,
wherein a message with a command to enable or disable local model update reports of some or all user equipments is send through a broadcasted system information message, preferably using only one bit.

**8.** Network device according to any of the preceding claims,
wherein a message with a command to enable or disable local model update reports of only selected user equipments is send through a MAC CE message and/or a dedicated message to those selected user equipments, preferably using one bit.

**8.** Network device according to any of the preceding claims,
wherein a message with a command to enable or disable local model update reports of all or some and/or only selected user equipments is sent in a periodic or non-periodic way, especially depending on a decision of a telecommunication network.

**9.** Telecommunication network (NW),
with at least one network device (gNB) according to any of the preceding claims, and
with at least one user equipment () according to any of the preceding claims.

**10.** Method for machine learning (AI/ML) related communication between a network device (gNB), especially according to any of the preceding claims and user equipments especially according to any of the preceding claims.
